# EUROPEAN PATENT APPLICATION

(11) **EP 1 298 239 A1**
(43) Date of publication of application: **02.04.2003**
(21) Application number: 00938829.9
(22) Date of filing: 19.06.2000
(51) Int. Cl.: D04B 27/10, D04B 27/22, B65H 59/38, G01L 5/04

(54) **SYSTEM FOR REGULATING THE TENSION OF THREADS OR WEBS IN TEXTILE MACHINES**

(71) Applicant: Bartes Stadler, Miquel, 08223 Terrassa (Barcelona) (ES)
(72) Inventor: Bartes Stadler, Miquel, 08223 Terrassa (Barcelona) (ES)
(74) Representative: Gonzalez Gonzalez, Pablo
(86) International application number: ES0000218
(87) International publication number: WO01098573

(57) **Abstract**

This system is applicable to textile machines that have spools (6) for supplying or taking up yarns or fabric (2), spool (6) driving means (5), and guide-bars (1) that support the yarns or fabrics (2) as they travel. At least one of the guide-bars (1) is mounted via supports (3) on sensors (4) which generate signals that are proportional to the tension of the yarns or the fabric (2) and which are linked up with the driving means (5) via control devices (7) that generate, on the basis of the signals from the sensors (4), control signals for the driving means (5) in order to regulate their speed and maintain the tension in the yarns or the fabric (2) within predetermined values.

## Description

### OBJECT OF THE INVENTION

This invention, as implied by its title, relates to a system for controlling the tension of yarns or fabrics in textile machinery, the machinery in question being of the kind fitted with spools for feeding out the yarn or for taking up the fabric, a drive system for the spools, and guide-bars upon which the yarns or fabrics rest when moving towards the weaving/knitting zone of the machine in the case of yarns or towards the take-up spools in the case of fabrics.

### BACKGROUND OF THE INVENTION

Various textile machines currently exist in the market that require the fitting of systems either to control supply of the yarns used for producing the fabric or to maintain constant tension in a moving fabric for the purpose of carrying out some operation on it.

In weaving/knitting machines, the yarns are fed out simultaneously from spools aligned with and attached driving means designed to turn all the spools at the same time. The yarns from the spools follow parallel paths as they enter the weaving/knitting zone of the machine, resting for the purpose on guide-bars that determine that path for them..

To achieve uniformity in the fabric, the quantity of yarn supplied by the spools needs to be controlled, which is particularly complicated with the systems currently in use.

Some of these systems, such as the ones described in patents US 5152158, US 5163307 and US 5461881, are intended to measure and control the amount of yarn drawn off the spools by altering the speed of rotation of the spools, this requiring a number of parameters to be taken into account, such as the kind of stitch being performed by the machine, the nominal diameter of the spools, and the length of yarn supplied in each rotation of the spool, since that length depends on how much yarn is left at the time on the spool.

A further problem arises with this kind of machine, consisting in that when the machine is stopped, the yarns relax and loosen, which leads to a defect in the fabric when the weaving/knitting starts up again.

A similar problem, though in this case relating to controlling the draw-speed of a fabric, is found in fabric-cutting machines such as the RASCHEL double-front machine, since in this case the fabric is cut longitudinally along its mid-plane to produce two pieces of the same area as the original piece, and usually intended for making blankets and upholstery.

In such cutting machines, the fabric from a spool moves frontally up against a stationary blade that cuts it along its longitudinal mid-plane, thus obtaining the two pieces mentioned above from the original fabric. These pieces are separated laterally and rest on guide-bars in their path towards drive rollers and towards the spools around which they are finally wound.

In this case, the tension of the two lateral portions of the cloth needs to be controlled to ensure that their travel is the same and that the blade acts on the mid-plane of the fabric to be cut or separated.

To adjust the speed of the two portions of fabric produced by the cutting operation in these cutting machines, highly complex gear trains are used, along with rockers intended partially to offset any differences in speed arising between the two fabric pieces produced.

### DESCRIPTION OF THE INVENTION

The system of this invention presents constructional features intended to solve the problems outlined in the previous section as regards both feeding the yarns in a controlled way to the weaving/knitting machines and controlling the tension of the fabrics in the above-mentioned cutting machines.

The system is applicable to textile machines that have spools for supplying yarn or for taking up fabric, means for driving the spools and guide-bars that support the yarns or fabrics as they travel, the operation of the system being based on regulating the tension in the yams or the fabric.

In this invention, the system has the special feature of having at least one of the guide-bars of the textile machine mounted via supports on sensors which generate signals proportional to the thrust exerted by the yams or the fabric on that guide-bar, the signals thus being proportional to the tension of the yams or of the fabric to be controlled.

These sensors are linked up with the drive means for the spools via control devices that receive the signals from the sensors and use them to generate control signals for the spool driving means, in order to regulate their speed of rotation and permanently maintain the tension in the yarns or the fabric within predetermined values.

This system provides a number of advantages, such as the possibility of being fitted without difficulty on new machines and on used machines, and ensuring, thanks to control of the tension, uniform take-up of fabric in RASCHEL double-front fabric cutting machines, or correct yarn feed-out in weaving/knitting machines, with no need to take account of other parameters such as the thickness of the yarn, the diameter of the spool or the quantity of yarn left on the spool at any given time.

In this invention, the spool driving means can spin in opposite directions, thus resulting in the spools spinning one way or the other at variable speed, forwards or backwards, in accordance with the control signals, to ensure that the tension in the yarns or the fabric is maintained within the predetermined values while the machine is working.

This special feature enables the tension of the yarns in weaving/knitting machines to be automatically adjusted after the machine has been at a standstill for some time, so that when work restarts the yarn tension is correct, thus avoiding the appearance of the defects that habitually arise in the fabrics when the weaving/knitting machine starts working.

In order to ensure reliable measuring of the tension in the yarns or the fabric, the supports of the guide-bar are arranged radially at the bisector of the angle formed by the yarns or the fabric where they rest with respect to said guide-bar, the thrust exerted by the yarns or fabric on that guide-bar thus being transmitted perpendicularly to the sensors.

### DESCRIPTION OF THE FIGURES

To complete the description being provided and in order to facilitate understanding of the characteristics of the invention, this specification is supplemented with a set of drawings which, by way of non-restrictive illustration, show the following:
- Figure 1 shows a schematic profile view of the system of this invention.
- Figure 2 shows a schematic profile view of an application of the system of this invention to a warp knitting machine.
- Figure 3 shows a schematic view of the system of this invention as applied to a RASCHEL double-front fabric cutting machine.

### PREFERRED EMBODIMENT OF THE INVENTION

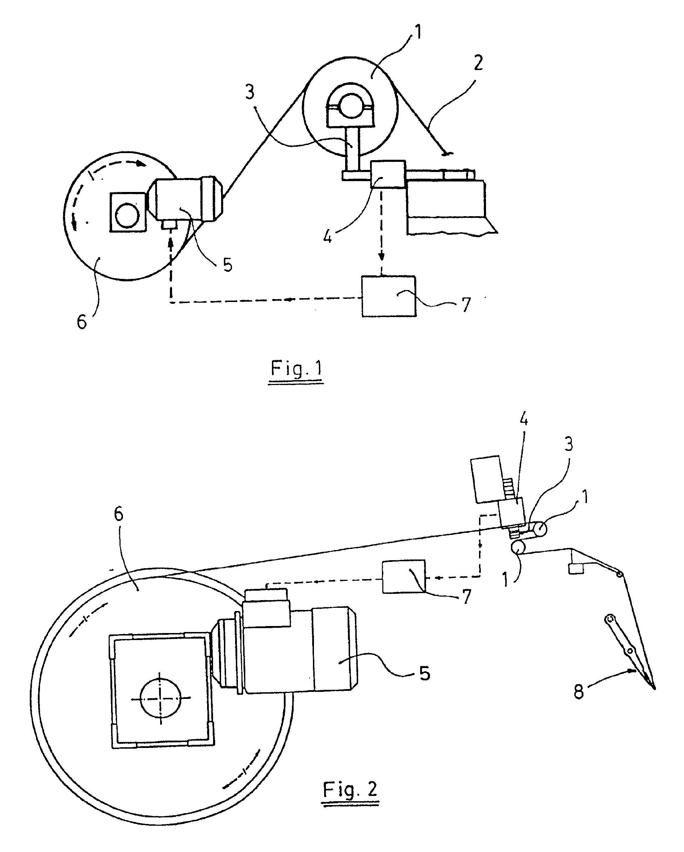

As can be seen from figure 1, the system of this invention has the feature that one of the guide-bars (1) of the textile machine on which the yarns or the fabric rest (2) and whose tension is to be regulated is mounted via supports (3) on sensors (4) that detect the tension of the yarns or the fabric (2) on the basis of the thrust exerted by the guide-bar (1) on the sensors (4).

The sensors (4) are linked up with the driving means (5) of a spool (6) via control devices (7).

The sensors (4) generate signals that are proportional to the tension of the yarns or the fabric (2) travelling over the guide-bar (1), while the control devices (7) generate, on the basis of the signals from the sensors (4), control signals for the driving means (5) making the spool (6) spin at variable speed, in either direction, in order to maintain the tension of the yarns or the fabric (2) within predetermined values.

In the example of embodiment shown in figure 2, the system of this invention can be seen as applied to a weaving knitting machine, it being employed in this case to control the tension of the yarns (2) fed out by the spools (6) to the weaving/knitting zone where the needles (8) of the machine are located.

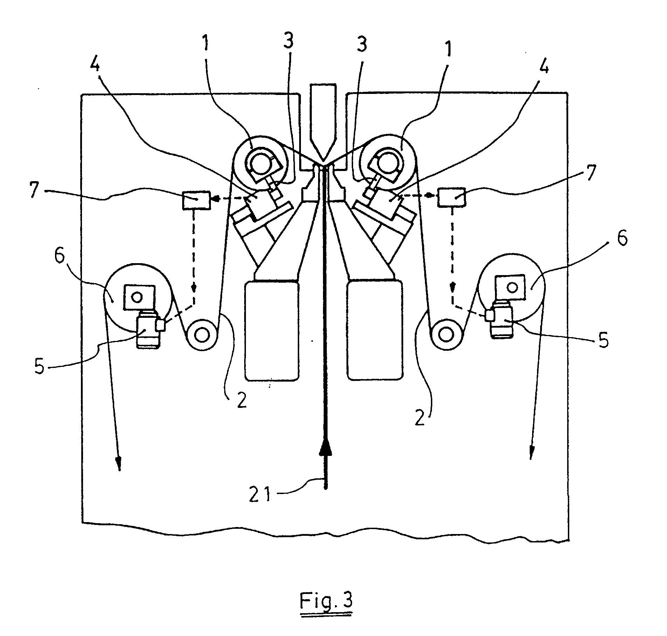

In the example of embodiment shown in figure 3, the system of this invention can be seen as applied to a RASCHEL double-front fabric cutting machine, the guide-bars (1) being mounted on sensors whose mission is to control the driving means (5) that results in the fabrics (2) being drawn, and thus to control their tension.

The nature of this invention having been sufficiently described, along with a example of preferred embodiment, it is stated for all pertinent purposes that the materials, form, size and arrangement of the items described may be modified, provided that the essential characteristics of the invention, as claimed hereunder, are not altered.

## Claims

1. System for controlling the tension in yarns or fabrics in textile machines of the kind that have spools (6) for supplying or taking up yarn or fabric (2), spool (6) driving means (5), and guide-bars (1) that support the yarns or fabrics (2) as they travel either towards the weaving/knitting zone of the machine in the case of yarns or towards the take-up spools (6) in the case of fabrics; **characterised in that** at least one of the guide-bars (1) is mounted via supports (3) on sensors (4) which generate signals that are proportional to the thrust exerted by the yarns or the fabric on that guide-bar, the signals thus being proportional to the tension of the yarns or the fabric (2); and **in that** these sensors (4) are linked up with the driving means (5) for the spools (6) via control devices (7) that receive the signals from the sensors (4) and use them to generate control signals for the spool (6) driving means (5), in order to regulate their speed and permanently maintain the tension in the yarns or the fabric (2) within predetermined values.

2. System, as claimed in Claim 1, **characterised in that** the spool driving means (5) can spin in opposite directions, thus resulting in the spools (6) spinning one way or the other at variable speed, forwards or backwards, in accordance with the control signals, to ensure that the tension in the yarns or the fabric (2) is maintained within the predetermined values.

3. System, as claimed in Claim 1, **characterised in that** the supports (3) are arranged radially with respect to the guide bar (1) at the bisector of the angle formed by the yarns or the fabric (2) guided by said guide-bar (1), the thrust exerted by the yarns or fabric (2) on that guide-bar (1) being transmitted perpendicularly to the sensors (4).
